# FASCICULE DE BREVET EUROPEEN

(11) **EP 0 564 337 B1**
(45) Date de publication et mention de la délivrance du brevet: **08.01.1997**
(21) Numéro de dépôt: 93400789.9
(22) Date de dépôt: 26.03.1993
(51) Int. Cl.: G09F 9/35, G02F 1/1335, G02F 1/136

(54) **Ecran d'affichage à masque optique et procédé de réalisation de cet écran**
Anzeigeschirm mit optischer Maske und Verfahren zur Verwirklichung dieses Schirms
Display screen with optical mask and procedure for realization of this screen

(30) Priorité: 30.03.1992 FR 9203809
(43) Date de publication de la demande: 06.10.1993
(73) Titulaire: FRANCE TELECOM, 75015 Paris (FR)
(72) Inventeur: Morin, François, F-22300 Lannion (FR); Le Contellec, Michel, F-22300 Lannion (FR)
(74) Mandataire: Signore, Robert

(56) Documents cités:
- EP-A- 0 136 509
- EP-A- 0 179 915
- EP-A- 0 271 313
- EP-A- 0 450 941
- PATENT ABSTRACTS OF JAPAN vol. 10, no. 68 (P-437)(2125) 18 Mars 1986& JP-A-60 207 116 (TOSHIBA) 18 Octobre 1985
- PATENT ABSTRACTS OF JAPAN vol. 8, no. 89 (P-270)24 Avril 1984 & JP-A-59 005 228 (ASAHI GLASS) 12 Janvier 1984

## Description

### Domaine technique

La présente invention a pour objet un écran d'affichage à masque optique et un procédé de réalisation de cet écran.

Elle trouve une application dans la réalisation d'écrans d'affichage destinés à fonctionner dans des ambiances sévères : éclairement intense et température élevée. L'écran de l'invention peut être utilisé pour les téléviseurs, les ordinateurs, les tableaux de bord de véhicules (automobiles, avions, etc...).

### Etat de la technique antérieure

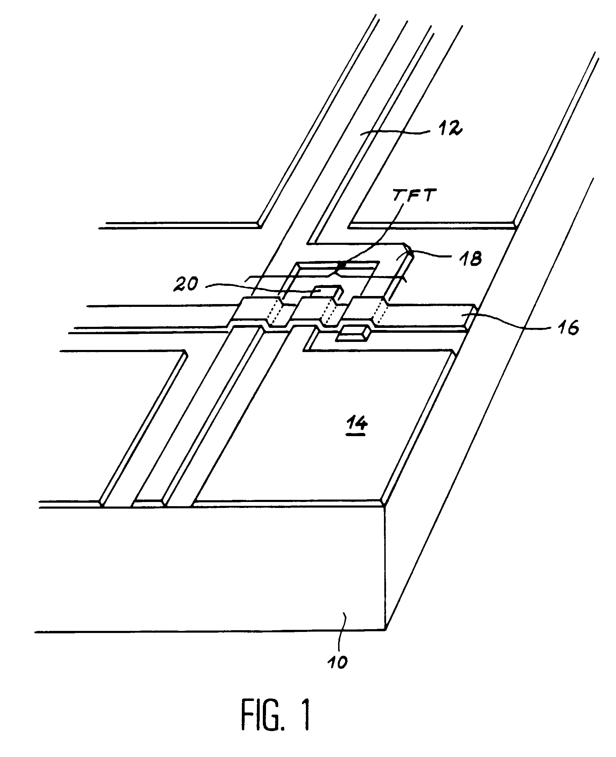

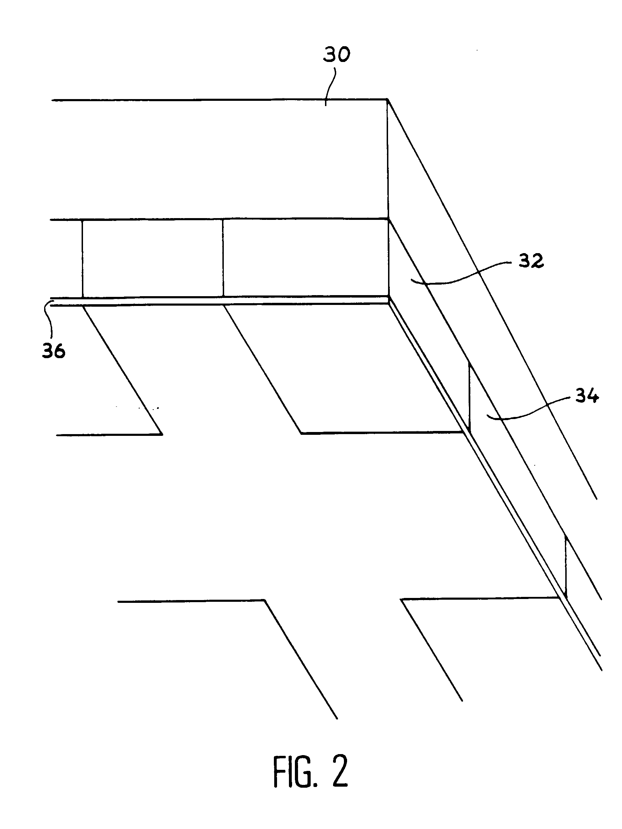

Un écran d'affichage comprend essentiellement deux plaques transparentes retenant entre elles un matériau électrooptique, notamment un cristal liquide. Les figures 1 et 2 annexées montrent des exemples de réalisation de telles plaques.

Sur la figure 1, tout d'abord, on voit un substrat transparent 10, par exemple en verre, recouvert :
- d'une famille de colonnes conductrices d'adressage 12, par exemple en oxyde d'étain et d'indium (ITO),
- d'une matrice d'électrodes 14 constituant chacun un point d'affichage ou pixel,
- et d'une famille de lignes d'adressage 16 constituées généralement par un empilement de couches, à savoir une couche semiconductrice (par exemple en aSi :H), une couche isolante (par exemple en SiN) et une couche conductrice (par exemple en aluminium).

Les colonnes 12 se prolongent par une crosse 18 et les électrodes 14 par un doigt 20, de telle sorte que ces divers appendices et la colonne forment la source et le drain d'un double transistor à couches minces TFT ("Thin Film Transistor" en terminologie anglosaxonne), les deux grilles étant constituées par la couche métallique de la ligne d'adressage.

Sur la figure 2, on voit une seconde plaque avec un second substrat transparent 30 (par exemple en verre), des pavés 32 de filtres colorés (rouge, vert, bleu), une grille noire (ou "Black Matrix") 34 et une contre-électrode 36 conductrice et transparente. Les filtres colorés 32 et la Black Matrix 34 ne sont pas essentiels dans l'invention qui va être décrite mais ils n'en sont pas moins utiles.

Un tel écran, ou tout au moins la première plaque illustrée sur la figure 1, peut être réalisé par un procédé ne nécessitant que deux niveaux de photolithogravure, comme décrit dans le document FR-A-2 533 072.

Pour éviter qu'un éclairement trop intense vienne perturber le fonctionnement des transistors, il est connu de placer, sous chacun de ceux-ci, un masque opaque. Une telle solution est décrite par exemple dans l'article de TOMISHISA SUNATA et al. intitulé "A Large-Area High-Resolution Active-Matrix Color LCD Addressed by a-Si TFT's", publié dans la revue "Proceeding of the Society for Information Display (SID)" 27, (1986), n° 3, pp. 229-233.

Cependant, ce masque, qui est généralement constitué par une couche métallique opaque, a pour effet de créer un transistor parasite sous le transistor à protéger. Si le masque est à un potentiel flottant, il peut se porter par influence à un potentiel positif et provoquer des courants de fuites qui sont néfastes au fonctionnement de l'écran.

On a pensé alors relier un tel masque à l'une des électrodes du transistor pour en fixer le potentiel. C'est ce qui est proposé par exemple dans le document EP-A-0 179 915. La structure utilisée est représentée sur la figure 3 annexée. Sur un substrat en verre 40, on trouve un masque 42 relié à une colonne d'adressage 43, le tout recouvert par un isolant 44. Sur cet isolant, se trouve l'électrode métallique 46, définissant le pixel, cette électrode étant prolongée par un segment 47 servant de drain. Par ailleurs, on trouve un semiconducteur 48 et une couche métallique 50 servant de source. Une ouverture 52 est percée dans l'isolant 44 pour relier le masque 42 à la source 50. Le transistor se complète par une couche isolante 54 et par une grille métallique 56.

Ce dispositif présente encore un inconvénient. En effet, les écrans à cristaux liquides sont toujours excités en alternatif. Ce qui joue le rôle de source du transistor dans une trame joue le rôle de drain dans l'autre. Les transistors d'un écran tel qu'il vient d'être décrit vont donc fonctionner nécessairement avec une tension grille-drain nulle dans l'une des trames. La caractéristique courant-tension sera alors du type diode : si la tension entre la source et le drain dépasse une tension de seuil, le courant deviendra très élevé.

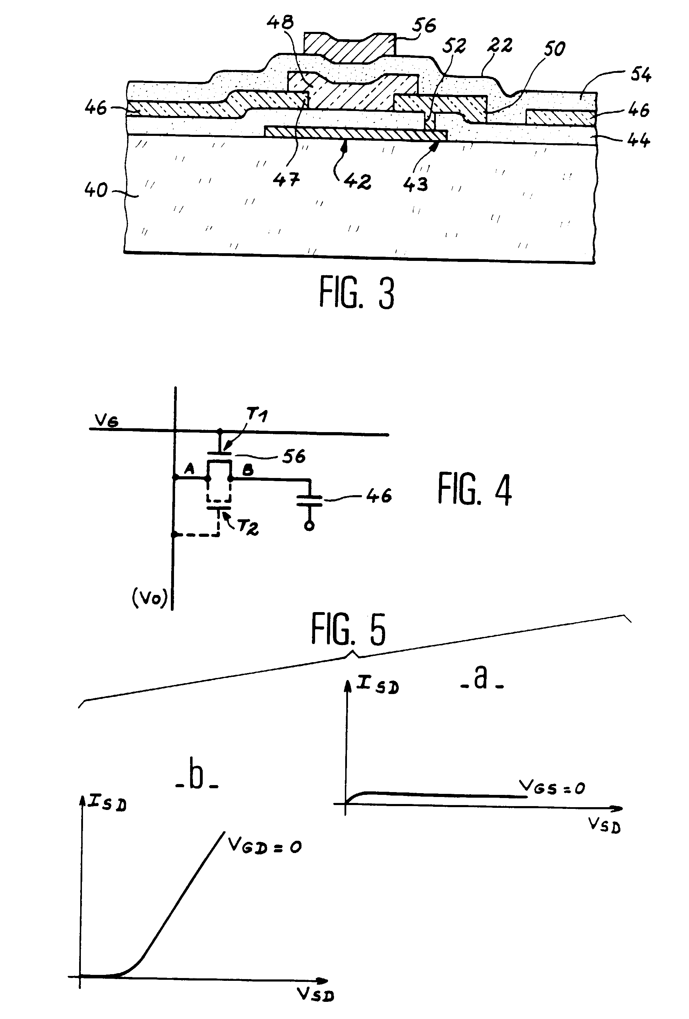

Les figures 4 et 5 annexées permettent de mieux comprendre cet inconvénient de l'art antérieur. Sur la figure 4, tout d'abord, est représenté un schéma électrique comprenant un transistor principal T1 et un transistor parasite T2 créé par le masque optique 42. Les points A et B marquent les zones correspondant alternativement à la source et au drain du transistor, selon la trame affichée.

La figure 5 montre, sur la partie a, la caractéristique courant source-drain (I_{SD}) en fonction de la tension source-drain (V_{SD}) pour une tension grille-source (V_{GS}) nulle et ceci pour le transistor parasite T2 pendant une trame. Sur la partie b, on voit la même caractéristique pour une tension grille-drain V_{GD} nulle, ce qui a lieu pour la trame suivante. Cette partie b montre ainsi que le courant source-drain I_{SD} peut devenir très important.

En résumé :
- pour une trame négative, la tension Vo appliquée sur la colonne d'adressage est négative ; si la tension en A est inférieure à la tension en B, A constitue la source du transistor T1 et le transistor parasite T2 fonctionne avec une tension grille-source (V_{GS}) nulle, alors, le courant source-drain I_{SD} est faible quelle que soit la tension source-drain (V_{SD}) (partie a de la figure 5),
- pour une trame positive, la tension Vo est positive ; si la tension en A est supérieure à la tension en B, le point A correspond au drain ; le transistor parasite T2 fonctionne à VGD=0. Le courant I_{SD} peut être grand, si V_{SD} devient supérieur à un seuil (partie b de la figure 5).

La solution de l'art antérieur présente donc incontestablement l'inconvénient de conduire à une fuite de courant, pour l'une des deux trames.

On connaît, par ailleurs, une autre solution décrite dans EP-A-0 136 509 qui consiste à introduire sous les transistors à couches minces un masque optique, ce masque pouvant passer partiellement sous le pixel. Le courant de fuite dans le transistor se trouve réduit et une capacité de stockage supplémentaire se trouve formée.

Il est stipulé, dans ce document, que le masque optique doit être situé sous les colonnes de la matrice (ainsi que sous les TFT et partiellement sous les pixels). Dans cette configuration, la constante de temps des colonnes devient non négligeable par rapport au temps d'adressage, ce qui fait apparaître une distorsion du signal vidéo d'un point à l'autre de l'écran. Cette configuration n'est donc envisageable que pour les écrans de petite taille.

Pour préciser ce point, on peut calculer le retard introduit en bout de colonne. La constante de temps du bout de colonne est approximativement : t'=RC/2, si R est la résistance totale de la colonne, et C sa capacité totale. On a R=(r.L)/(d.w) avec r : résistivité ; L : longueur ; d : épaisseur ; w : largeur.

On a par ailleurs, C=Cmo+Cx+Ccl, avec Cmo : capacité colonne/masque optique, Cx la capacité croisements lignes/colonnes, Ccl la capacité cristal liquide (colonne/contre-électrode), Cmo=(eₗ.w.L)/dᵢ, Cx=N.(eⱼ.w.w)/dⱼ, Ccl=(eₖ.w.L)/dₖ, avec e et d respectivement constante diélectrique et épaisseur des isolants, (i, j et k sont des indices représentant l'isolant du masque optique, d'un croisement et du cristal liquide).

On voit facilement que Cmo/Ccl>10 puisque dₖ=5 microns et dᵢ=0,5 micron et eᵢ peu différent de eₖ. Par ailleurs, on a généralement Ccl peu différent de Cx.

Si, donc, sans masque optique, la colonne a une capacité de 2 (en unités arbitraires), elle sera de 12 (dans les mesures unités) avec le masque optique. La constante de temps correspondante sera donc, de ce fait, 6 fois plus grande. On peut ainsi conclure que la longueur limite de colonne est 6 fois plus petite dans ce cas. Cette longueur limite est celle pour laquelle le retard colonne devient incompatible avec le temps d'adressage.

Dans le document cité, on peut voir, sur les différentes figures, que le matériau constitutif de la colonne et du pixel est de l'ITO (conducteur et transparent). Avec un ITO de résistance par carré de 10 Ohms, la longueur limite est de 25 cm environ, sans masque optique sous les colonnes. Elle sera de moins de 5 cm si l'on dispose un masque optique sous les colonnes.

### Exposé de l'invention

La présente invention a justement pour but de remédier à tous ces inconvénients. A cette fin, elle préconise un masque qui est constitué d'autant de lignes conductrices opaques qu'il y a de ligne d'adressage, toutes ces lignes conductrices opaques étant réunies les unes aux autres et reliées à un contact apte à porter l'ensemble du masque optique à un potentiel de référence. Ces lignes conductrices opaques sont disposées sur le substrat et sous les lignes d'adressage et sont recouvertes d'une couche isolante diélectrique transparente.

Dans une variante avantageuse, les lignes conductrices opaques du masque optique présentent en outre une largeur supérieure à la largeur des lignes d'adressage et passent en partie sous les électrodes. La partie de recouvrement d'une électrode avec une ligne du masque optique constitue, avec le diélectrique recouvrant cette ligne du masque, un condensateur de stockage associé à cette électrode.

La présente invention offre donc les mêmes avantages intrinsèques que l'invention du document EP-A-0 136 509 (à savoir, meilleure tenue sous illumination par réduction du photocourant dans le TFT et meilleure tenue en température à cause de la capacité de stockage), mais n'en a pas les inconvénients. En effet, dans l'invention, ce sont les lignes qui voient leur capacité augmenter du fait du masque optique. Or, si les colonnes étaient réalisées dans un matériau assez résistif (ITO), les lignes sont réalisées en un très bon conducteur par exemple l'aluminium. La constante de temps "lignes" reste, dans ces conditions, à un niveau tout à fait acceptable, même dans les grands écrans. Dans la présente invention, la constante de temps "colonnes" reste approximativement identique à ce qu'elle était sans masque optique.

L'écran d'affichage de l'invention peut être réalisé simplement et ne nécessite qu'un niveau de photolithographique supplémentaire par rapport à la solution connue dite à deux niveaux de masquage décrite dans le document FR-A-2 533 072 déjà cité.

La présente invention a donc également pour objet un procédé de réalisation d'un écran d'affichage dans lequel, sur un premier substrat :
- on dépose un film mince de matériau conducteur opaque et on grave ce film selon un motif constitué de lignes de longueur et de largeur au moins égales aux futures lignes d'adressage,
- on dépose sur l'ensemble un film isolant diélectrique transparent, et
- on poursuit les opérations comme dans le procédé à deux niveaux de photolithographie pour obtenir les colonnes d'adressage, les électrodes, les lignes d'adressage, ces dernières étant superposées aux lignes du masque optique.

De préférence, on grave le premier motif pour former des lignes opaques légèrement plus larges que les futures lignes d'adressage.

Un avantage annexe de la présente invention est une diminution du coût de la plaque contenant les filtres colorés.

On sait que, pour avoir un bon contraste, un écran doit avoir une grille noire ou "back matrix" autour de chaque point coloré. Pour réaliser un tel maillage, il faut généralement utiliser des techniques de photolithographie, d'où un coût élevé de la plaque supportant les filtres colorés.

Des techniques moins coûteuses peuvent être mises en oeuvre, mais elles sont en général moins performantes. Les techniques d'imprimerie par exemple sont très attractives, mais on ne sait bien réaliser que des motifs en bandes du fait des effets de bord. Un maillage orthogonal précis est donc à exclure.

Or, si on utilise la présente invention pour réaliser la plaque contenant la matrice de TFT, la moitié de la "black matrix" est déjà réalisée sur la plaque support de TFT, grâce au masque optique horizontal. Sur la plaque opposée, qui supporte les filtres colorés, il ne restera plus qu'à fabriquer les bandes noires verticales pour obtenir, par super-position, le maillage noir complet. Ces bandes noires à réaliser sur la plaque colorée seront, dans ce cas, parallèles aux bandes colorées Rouge, Vert, Bleu des filtres. Cette structure simplifiée est maintenant facile à réaliser par la technique d'impression offset. On peut donc obtenir un coût réduit pour la plaque colorée.

Dans le cas où le masque optique est constitué de bandes placées sous les colonnes, donc verticales, les bandes horizontales qui restent à réaliser sur la plaque colorée se retrouvent à 90° des bandes colorées Rouge, Vert, Bleu, ce qui rend la réalisation beaucoup plus difficile par la même technique d'imprimerie.

### Brève description des dessins

- la figure 1, déjà décrite, montre une première plaque d'un écran selon l'art antérieur ;
- la figure 2, déjà décrite, montre une seconde plaque selon le même art antérieur,
- la figure 3, déjà décrite, montre, en coupe, un transistor en couches minces avec un masque optique selon l'art antérieur ;
- la figure 4, déjà décrite, montre un circuit électrique équivalent ;
- la figure 5, déjà décrite, illustre le fonctionnement de ce circuit équivalent ;
- la figure 6 montre, en vue de dessus, un masque optique conforme à l'invention ;
- la figure 7 montre ce masque optique en coupes (longitudinale et transversale) ;
- la figure 8 montre, en vue de dessus, une ligne d'adressage avec son masque optique ;
- la figure 9 montre cette ligne d'adressage avec son masque en coupes (longitudinale et transversale).

### Exposé détaillé d'un mode de réalisation

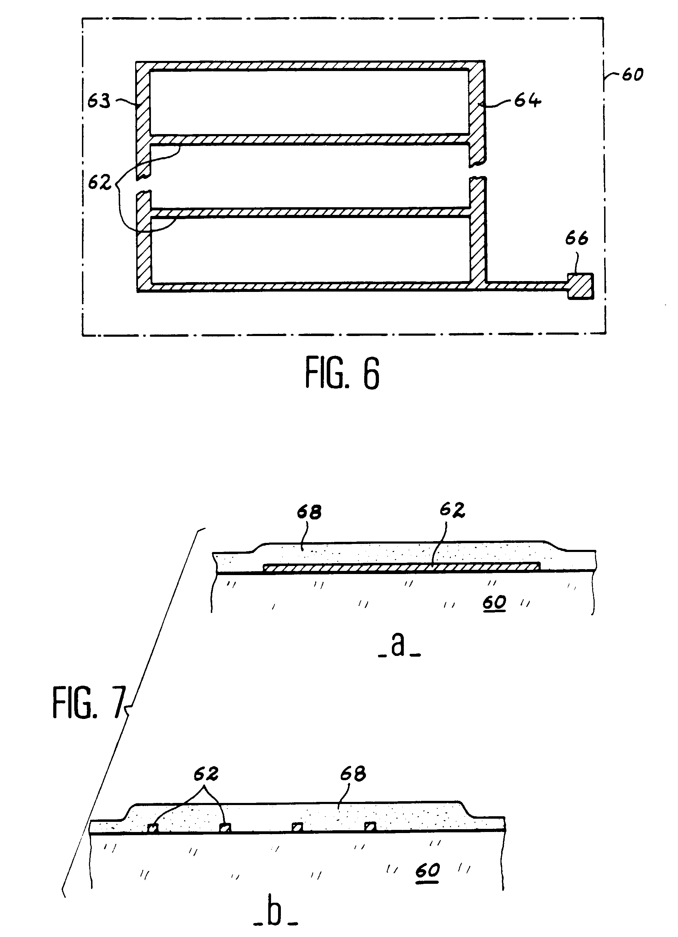

On voit, sur la figure 6, une plaque transparente 60, (par exemple en verre) sur laquelle a été déposée une couche de matériau conducteur opaque, par exemple en chrome, couche qui a ensuite été gravée selon un motif comprenant des lignes 62 reliées à deux colonnes 63, 64. La couche de chrome peut avoir une centaine de nanomètres d'épaisseur. Un plot de contact 66 est également prévu, relié à l'ensemble du masque.

On dépose ensuite sur ce motif une couche isolante diélectrique 68, par exemple en silice, d'une épaisseur de quelques centaines de nanomètres (par exemple 500).

La figure 7 montre une coupe longitudinale (partie a) le long d'une ligne 62 et une coupe transversale (partie b) perpendiculaire aux lignes.

Sur ce masque optique ainsi isolé, on réalise ensuite la matrice de transistors en couches minces comme décrit dans le document FR-A-2 533 072 déjà cité. On rappelle que ce procédé comprend deux opérations de photogravure :
- dépôt puis gravure d'une couche d'ITO pour réaliser les colonnes et les pixels de la matrice (et les sources et drains des transistors),
- dépôt puis gravure d'un empilement de trois couches (silicium amorphe, nitrure de silicium et aluminium) pour constituer les lignes de la matrice et les grilles des transistors.

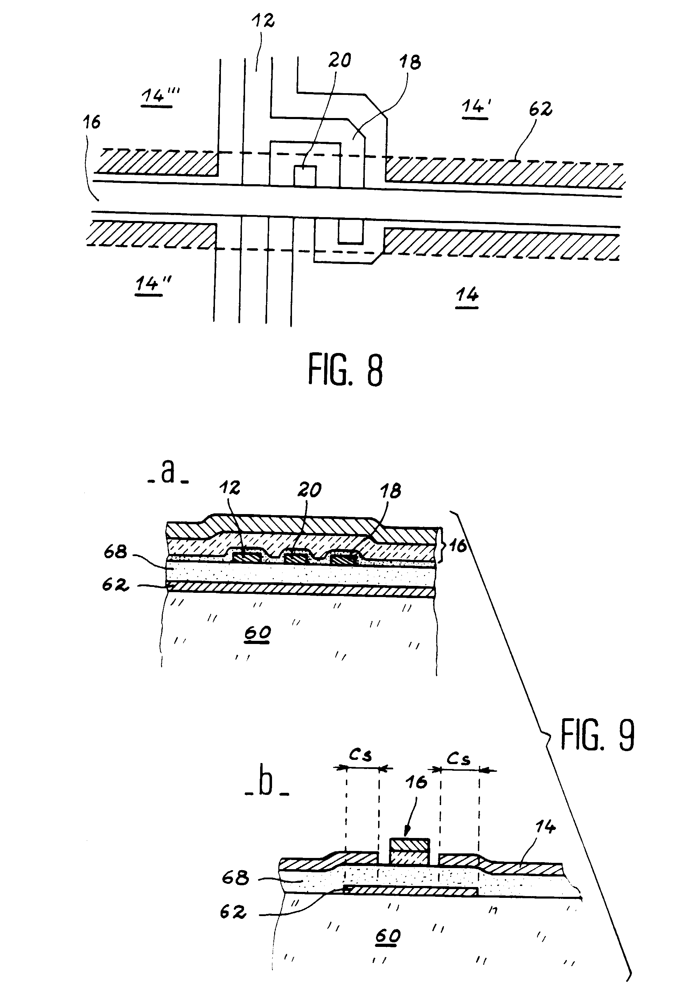

Le résultat obtenu est illustré en vue de dessus sur la figure 8 et en coupes sur la figure 9, d'une part, le long d'une ligne du masque (a) et d'autre part, perpendiculairement à cette ligne (b). Sur ces deux figures, les éléments déjà représentés sur la figure 1 portent les mêmes références, à savoir 12 pour la colonne, 14 pour l'électrode, 16 pour la ligne d'adressage, 18 pour la crosse reliée à la colonne et 20 pour le doigt prolongeant l'électrode. Ce que montre plus particulièrement la figure 8, c'est la largeur relative des lignes : la ligne 62 constituant le masque optique est plus large que la ligne d'adressage 16 et passe en partie sous les électrode 14 qui la bordent. La zone de recouvrement partiel entre l'électrode 14 et la ligne 62 du masque optique est représentée hâchurée. (Sur la figure 8, on voit, en partie, quatre électrodes 14, 14', 14'' et 14‴ réparties de chaque côté de la figure d'adressage). Cette zone constitue un condensateur de stockage dont le rôle a été défini plus haut.

La figure 9 montre une coupe le long d'une ligne 62 du masque optique (partie a) et perpendiculairement à cette ligne (partie b). Chaque ligne du masque passe en fait sous les deux séries d'électrodes qui la bordent pour créer deux séries de condensateurs de stockage Cl.

La réalisation de l'écran complet se poursuit par l'assemblage de la plaque ainsi réalisée avec une plaque à filtres colorés telle qu'illustrée sur la figure 2. On utilise pour ce faire les techniques usuelles, de traitement des surfaces, dépôt d'espaceurs, collage, remplissage, pose de polariseurs. L'écran est ensuite connecté aux circuits électroniques périphériques.

## Revendications

1. Ecran d'affichage à matrice active comprenant :
- d'une part, une première plaque comprenant un premier substrat transparent (10) revêtu d'une matrice d'électrodes (14) commandée par une matrice de transistors en couches minces (TFT), chaque transistor comprenant une grille, une source et un drain, les grilles étant réunies à des lignes d'adressage (16) et les sources et drains à des colonnes d'adressage (12), ce premier substrat comprenant encore un masque optique constitué d'une couche mince opaque disposée au moins sous chaque transistor,
- d'autre part, une seconde plaque comprenant un second substrat transparent (30) revêtu d'une contre-électrode (36),
cet écran étant caractérisé par le fait que le masque optique est seulement formé sous les lignes d'adressage (16) reliées aux grilles des transistors en couches minces et est constitué d'autant de lignes conductrices opaques (62) qu'il y a de lignes d'adressage métalliques (16), toutes ces lignes conductrices opaques (62) étant réunies les unes aux autres et reliées à un contact (66) apte à porter l'ensemble du masque optique à un potentiel de référence, les lignes conductrices opaques (62) du masque étant disposées sur le premier substrat (10) et étant recouvertes d'une couche isolante diélectrique transparente (68).

2. Ecran d'affichage selon la revendication 1, caractérisé par le fait que les lignes conductrices opaques (62) du masque optique présentent une largeur supérieure à la largeur des lignes d'adressage (16) et passent en partie sous les électrodes (14), la partie de recouvrement d'une électrode (14) avec une ligne du masque optique (62) constituant, avec le diélectrique (68) recouvrant cette ligne (62) du masque, un condensateur de stockage (Cs) associé à cette électrode (14).

3. Ecran d'affichage selon la revendication 1, caractérisé par le fait que le masque optique comprend deux colonnes conductrices (63, 64) situées en bout de lignes (62) et auxquelles toutes les lignes (62) du masque sont reliées.

4. Ecran d'affichage selon la revendication 1, caractérisé par le fait que les lignes conductrices opaques (62) du masque optique sont en chrome.

5. Ecran d'affichage selon la revendication 4, caractérisé par le fait que les lignes conductrices opaques (62) du masque optique ont une épaisseur de l'ordre d'une centaine de nanomètres.

6. Ecran d'affichage selon la revendication 1, caractérisé par le fait que la couche diélectrique transparente (68) est en silice.

7. Ecran d'affichage selon la revendication 6, caractérisé par le fait que la couche diélectrique transparente (68) présente une épaisseur de quelques centaines de nanomètres.

8. Procédé de réalisation d'un écran d'affichage à matrice active selon la revendication 1, dans lequel on forme :
- d'une part, une première plaque, par les opérations suivantes :
- sur un premier substrat transparent (10), on dépose une couche conductrice transparente et on grave cette couche pour former des colonnes d'adressage (12), une matrice d'électrodes (14) et des prolongements (18, 20) constituant les futurs drains et sources de transistors en couches minces,
- on dépose un empilement de couches comprenant une couche semiconductrice, une couche isolante et une couche métallique et on grave cet empilement pour réaliser des lignes d'adressage (16) et les grilles des transistors en couches minces,
- d'autre part, une seconde plaque en déposant, sur un second substrat transparent (30) notamment une couche conductrice transparente (36) servant de contre-électrode,
- on assemble la première et la seconde plaques,
ce procédé étant caractérisé par le fait que, pour former la première plaque, préalablement au dépôt sur le premier substrat transparent (10) de la couche conductrice servant à réaliser les colonnes d'adressage (12) et les électrodes (14) :
- on forme un masque optique en déposant un film mince de matériau conducteur opaque et en gravant ce film seulement selon un motif constitué de lignes (62) à des emplacements correspondant aux futures lignes d'adressage, ces lignes étant toutes réunies entre elles,
- on dépose sur l'ensemble de ces lignes (62) un film isolant diélectrique transparent (68).

9. Procédé selon la revendication 8, caractérisé par le fait qu'on grave les lignes (62) du masque optique pour leur donner une largeur supérieure à celle des futures lignes d'adressage (16).

10. Procédé selon la revendication 8, caractérisé par le fait qu'on dépose le film mince de matériau conducteur opaque par pulvérisation cathodique.

11. Procédé selon l'une quelconque des revendications 8 à 10, caractérisé par le fait que le matériau conducteur opaque est le chrome.

12. Procédé selon l'une quelconque des revendications 8 à 11, caractérisé par le fait qu'on dépose un film de matériau conducteur opaque avec une épaisseur de l'ordre d'une centaine de nanomètres.

13. Procédé selon l'une quelconque des revendications 8 à 12, caractérisé par le fait qu'on dépose un film isolant diélectrique transparent (68) en silice.

14. Procédé selon l'une quelconque des revendications 8 à 13, caractérisé par le fait qu'on dépose un film isolant diélectrique transparent (68) avec une épaisseur de l'ordre de quelques centaines de nanomètres.

## Patentansprüche

1. Anzeigeschirm mit aktiver Matrix bestehend
- einerseits aus einer Platte aus einer durchsichtigen Trägerschicht (10), die mit einer von einer Dünnschichttransistorenmatrix (TFT) gesteuerten Elektrodenmatrix (14) überzogen ist, wobei jeder Transistor aus einem Gitter, einer Source und einem Drain besteht, die Gitter mit Adressierungszeilen (16) sowie die Sources und Drains mit Adressierungsspalten (12) verbunden sind und die genannte erste Trägerschicht eine weitere optische Maske umfaßt, die aus einer mindestens unter jedem Transistor angeordneten, lichtdichten dünnen Schicht besteht,
- andererseits aus einer weiteren Platte, die aus einer weiteren mit einer Gegenelektrode (36) überzogenen, durchsichtigen Trägerschicht (30) besteht,
wobei dieser Schirm dadurch gekennzeichnet, daß die optische Maske nur unter den Adressierungszeilen (16) liegt, die mit den Gittern der Dünnschichttransistoren verbunden sind, und die Anzahl der lichtdichten leitenden Zeilen (62) mit der Anzahl der metallischen Adressierungszeilen (16) übereinstimmt, wobei alle lichtdichten leitenden Zeilen (62) untereinander verbunden und an einen Kontakt (66) angeschlossen sind, der dazu geeignet ist, die gesamte optische Maske auf ein Referenzpotential zu bringen, und die lichtdichten leitenden Zeilen (62) der Maske auf der ersten Trägerschicht (10) angeordnet und mit einer durchsichtigen dielektrischen Isolierschicht (68) überzogen sind.

2. Anzeigeschirm gemäß Anspruch 1, dadurch gekennzeichnet, daß die lichtdichten Leitungen (62) der optischen Maske breiter sind als die Adressierungszeilen (16) und teilweise unter den Elektroden (14) verlaufen, wobei die Beschichtung einer Elektrode (14) zusammen mit einer Leitung der optischen Maske (62) einen mit dieser Elektrode (14) verbundenen Speicherkondensator (Cs) bildet, und die genannte Leitung von einem Dielektrikum (68) überzogen ist.

3. Anzeigeschirm gemäß Anspruch 1, dadurch gekennzeichnet, daß die optische Maske zwei leitende Spalten (63, 64) umfaßt, die sich am Ende der Zeilen (62) befinden und mit der alle Zeilen (62) der optischen Maske verbunden sind.

4. Anzeigeschirm gemäß Anspruch 1, dadurch gekennzeichnet, daß die lichtdichten leitenden Zeilen (62) der optischen Maske aus Chrom bestehen.

5. Anzeigeschirm gemäß Anspruch 4, dadurch gekennzeichnet, daß die lichtdichten leitenden Zeilen (62) der optischen Maske ca. 100 Nanometer dick sind.

6. Anzeigeschirm gemäß Anspruch 1, dadurch gekennzeichnet, daß die durchsichtige Dielektrikumschicht (68) aus Silizium besteht.

7. Anzeigeschirm gemäß Anspruch 6, dadurch gekennzeichnet, daß die durchsichtige Dielektrikumschicht (68) mehrere hundert Nanometer dick ist.

8. Verfahren zur Herstellung eines Anzeigeschirmes mit aktiver Matrix gemäß Anspruch 1, bei dem:
- einerseits eine Platte in folgenden Schritten hergestellt wird:
- auf einer ersten durchsichtigen Trägerschicht (10) wird eine leitende durchsichtige Schicht aufgebracht und so graviert, daß Adressierungsspalten (12), eine Elektrodenmatrix (14) und Verlängerungen (18, 20) entstehen, die die zukünftigen Drains und Sources der Dünnschichttransistoren bilden,
- eine aus einer Halbleiterschicht, einer Isolierschicht und einem Metallüberzug bestehende Schichtdecke wird aufgebracht und so graviert, daß Adressierungszeilen (16) und die Gitter der Dünnschichttransistoren entstehen,
- andererseits eine zweite Platte hergestellt wird, indem auf einer zweiten durchsichtigen Trägerschicht (30) in erster Linie eine durchsichtige leitende Schicht (36) aufgebracht wird, die als Gegenelektrode dient,
und die erste und zweite Platte zusammengebaut werden,
wobei das Verfahren dadurch gekennzeichnet ist, daß zur Bildung der ersten Platte vor dem Aufbringen der zur Bildung der Adressierspalten (12) und Elektroden (14) dienenden leitenden Schicht auf die erste durchsichtige Trägerschicht (10):
- eine optische Maske geformt wird, indem ein Dünnfilm aus lichtdichtem leitendem Material aufgebracht und genau nach einem aus Zeilen (62) bestehenden Muster graviert wird. das der Anordnung der zukünftigen Adressierzeilen entspricht, wobei diese Zeilen untereinander verbunden sind und
- auf diese Zeilen (62) ein durchsichtiger isolierender Dielektrikumfilm (68) aufgebracht wird.

9. Verfahren gemäß Anspruch 8, dadurch gekennzeichnet, daß die Zeilen (62) der optischen Maske so graviert werden, daß sie breiter sind als die zukünftigen Adressierzeilen (16).

10. Verfahren gemäß Anspruch 8, dadurch gekennzeichnet, daß der aus leitendem Material bestehende, lichtdichte Dünnfilm durch Kathodenzerstäubung aufgebracht wird.

11. Verfahren gemäß einem der Ansprüche 8 bis 10, dadurch gekennzeichnet, daß als lichtdichtes leitendes Material Chrom verwendet wird.

12. Verfahren gemäß einem der Ansprüche 8 bis 11, dadurch gekennzeichnet, daß ein lichtdichter Film aus leitendem Material mit einer Dicke von ca. einhundert Nanometern aufgetragen wird.

13. Verfahren gemäß einem der Ansprüche 8 bis 12, dadurch gekennzeichnet, daß ein durchsichtiger dielektrischer Isolierfilm (68) aus Silizium aufgetragen wird.

14. Verfahren gemäß einem der Ansprüche 8 bis 13, dadurch gekennzeichnet, daß ein durchsichtiger dielektrischer Isolierfilm (68) mit einer Dicke von mehreren hundert Nanometern aufgetragen wird.

## Claims

1. Display screen having an active matrix having on the one hand a first plate with a first transparent substrate (10) covered with an array of electrodes (14) controlled by an array of thin film transistors (TFT), each transistor having a grid, a source and a drain, the grids being joined to the addressing rows (16) and the sources and drains to the addressing columns (12), said first substrate also having an optical mask constituted by an opaque thin film located at least beneath each transistor and on the other hand a second plate having a second transparent substrate (30) covered with a counterelectrode (36), said screen being characterized in that the optical mask is only formed beneath the addressing rows (16) connected to the grids of the thin film transistors and has the same number of opaque conducting rows (62) as there are metal addressing rows (16), all the opaque conductive rows (62) being connected to one another and connected to a contact (66) able to raise the complete optical mask to a reference potential, the opaque conductive rows (62) of the mask being placed on the first substrate (10) and covered with a transparent, dielectric, insulating layer (68).

2. Display screen according to claim 1, characterized in that the opaque conducting rows (62) of the optical mask have a width greater than the width of the addressing rows (16) and pass partly below the electrodes (14), the overlap zone of an electrode (14) with a row of the optical mask (62) constituting, with the dielectric (68) covering said mask row (62), a storage capacitor (Cs) associated with said electrode (14).

3. Display screen according to claim 1, characterized in that the optical mask comprises two conducting columns (63, 64) located at the end of the rows (62) and to which all the rows (62) of the mask are connected.

4. Display screen according to claim 1, characterized in that opaque conducting rows (62) of the optical mask are made from chromium.

5. Display screen according to claim 4, characterized in that the opaque conducting rows (62) of the optical mask have a thickness of approximately 100 nanometres.

6. Display screen according to claim 1, characterized in that the transparent, dielectric layer (68) is made from silica.

7. Display screen according to claim 6, characterized in that the transparent, dielectric layer (68) has a thickness of a few hundred nanometres.

8. Process for producing a display screen having an active matrix according to claim 1, wherein formation takes place:
- on the one hand of a first plate, using the following operations: on a first transparent substrate (10) is deposited a transparent conductive layer and said layer is etched to form addressing columns (12), an array of electrodes (14) and extensions (18, 20) constituting the future drains and sources of thin film transistors,
the deposition of a stack of layers comprising a semiconductor layer, an insulating layer and a metal layer and said stack is etched to produce addressing rows (16) and the grids of thin film transistors,
- on the other hand, a second plate by depositing on a second transparent substrate (30) in particular a transparent conductive layer (36) serving as a counterelectrode,
the first and second plates are assembled,
said process being characterized in that, for forming the first plate, prior to the deposition on the first transparent substrate (10) of the conductive layer serving to produce the addressing columns (12) and the electrodes (14):
- an optical mask is formed by depositing a thin, opaque conductive material film and etching said film solely in accordance with a pattern constituted by rows (62) at locations corresponding to the future addressing rows, said rows all being joined together,
- a dielectric, transparent insulating film (68) is deposited on all these rows (62).

9. Process according to claim 8, characterized in that the rows (62) of the optical mask are etched in order to give them a width exceeding that of future addressing rows (16).

10. Process according to claim 8, characterized in that the thin opaque conductive material film is deposited by cathodic sputtering.

11. Process according to any one of the claims 8 to 10, characterized in that the opaque conductive material is chromium.

12. Process according to any one of the claims 8 to 11, characterized in that deposition takes place of an opaque conductive material film with a thickness of approximately one hundred nanometres.

13. Process according to any one of the claims 8 to 12, characterized in that deposition takes place of a transparent, dielectric insulating film (68) made from silica.

14. Process according to any one of the claims 8 to 13, characterized in that deposition takes place of a transparent, dielectric insulating film (68) with a thickness of a few hundred nanometres.
